# EUROPÄISCHE PATENTANMELDUNG

(11) **EP 4 574 720 A1**
(43) Veröffentlichungstag der Anmeldung: **25.06.2025**
(21) Anmeldenummer: 24000147.9
(22) Anmeldetag: 18.12.2024
(51) Int. Cl.: B65G 47/82, B65G 47/84, B65B 35/20, B65B 35/16

(54) **TRANSFERVORRICHTUNG UND-VERFAHREN FÜR MASCHINEN DEREN BEARBEITUNGSBEREICH UNTERHALB ODER/UND OBERHALB DER TRANSFEREBENE LIEGT**

(30) Priorität: 21.12.2023 IT 202300027567
(71) Anmelder: Tanzer Maschinenbau Srl, 39011 Lana (BZ) (IT)
(72) Erfinder: Mantinger, Martin, I-39010 Nalles (Bz) (IT); Schnitzer, Josef, I-39019 Tirolo (Bz) (IT); Tanzer, Peter, I- 39011 Lana (BZ) (IT)
(74) Vertreter: Oberosler, Ludwig

(57) **Zusammenfassung**

Transfervorrichtung für Maschinen mit unterhalb oder/und oberhalb der Transferebene vorgesehenem Bearbeitungsbereich (I, S), wobei die Vorrichtung aus einer linearen Beschickungsvorrichtung (2) und einer linearen Abführvorrichtung (4) für die zu bearbeitenden Objekte (A, A1, A2) und einer, zwischen den genannten bekannten Beschickungs-/Abführeinrichtungen (2, 4) vorgesehene, Plattform (P) für das Anheben (Ps) und/oder Absenken (Pi) der besagten Objekte in eine oder in beide Bearbeitunsbereiche (S, I), besteht, wobei beidseitig entlang der besagten bekannten Beschickungs-/Abführvorrichtungen (2, 4) und längs der Plattform (P), in einer Ebene parallel zur Transferebene der Objekte, innerhalb des Durchlaufbereiches dieser, ein Mitnehmerkopf (3b) mit Mitnehmerzapfen (3c) und ein Rückhaltekopf (30b) mit Rückhaltezapfen (30c), parallel zur Beschickungs- und Abführbewegung (2a, 4a) der Objekte (A, A1, A2) verfahrbar (3x, 30x) an einer einzigen Führung (7) an beiden Längsseiten der besagten Vorrichtungen (2, 4) und der Plattform (P) gelagert ist, wobei die besagten Zapfen (3c, 30c) aus- und einfahrbar (3y, 30y) sind um eine aktive ausgefahrene Position einnehmen zu können, indem sie in den Durchlaufbereich der transferierten Objekte ragen, und eine passive zurückgefahrene Position einnehmen können, indem sie nicht den Durchlauf der besagten Objekte behindern und wobei jeder der besagten Köpfe (3b, 30b) mit einem flexiblen spezifischen Übertragungsmittel (3a, 30a) verbunden ist welches jeweils von einem spezifischen Motor (3m, 30m) bewegt wird.

## Beschreibung

Die Erfindung bezieht sich auf eine Vorrichtung und auf das Verfahren für den Transfer und die Positionierung des zu bearbeitenden Objektes auf Maschinen deren Bearbeitungsbereich unterhalb oder/und oberhalb der Transferebene des besagten Objektes liegt.

Es sind Maschinen bekannt in welchen das zu bearbeitende Objekt, aus Gründen der Automatisierung oder der Leistung, in einem Bereich der Bearbeitung unterzogen wird welcher unterhalb und/oder oberhalb der Transferebene des Objektes liegt, wobei dieses nach erfolgter Bearbeitung wieder in die besagte Transferebene gebracht wird um eventuellen anschließenden Bearbeitungsfasen, bzw. anderen Bearbeitungen auf nachfolgenden Maschinen, zugeführt zu werden.

In den besagten bekannten Maschinen erfolgt der Transfer des zu bearbeitenden Objektes in einem Bereich oberhalb oder/und unterhalb der Transferebene mittels Förderbänder welche auf die sich gegenüberliegenden Seiten des Objektes, parallel zur Transferrichtung wirken. Nach der Positionierung des Objektes auf der Plattform oder auf der Hebe- oder Absenkvorrichtung, zwecks Einnahme der Bearbeitungsposition, werden die besagten seitlich wirkenden Förderbänder sowie die eventuellen Längsauflageführungen, quer zur Transferrichtung verstellt um das Objekt von der Wirkung der seitlichen Förderbänder zu befreien damit es auf einer darunter angeordneten Plattform oder Struktur aufliegt welche vertikal beweglich ist um das Objekt in eine Bearbeitungsvorrichtung, z.B. in einen Schleuderkäfig, zu bringen welche im besagten Bereich oberhalb oder unterhalb der Transferebene positioniert ist. Die besagten Förderbänder bilden, zusammen mit den entsprechenden Führungen, dem Motor und den Umleitorganen, relativ schwere und große Baueinheiten welche z.B. pneumatisch, aus dem Transferbereich der Objekte durch Absenken oder Zurückziehen entfernt werden können.

Für den Transfer von zu bearbeitenden Objekten ist weiters der Einsatz von Ketten oder Zahnriemen, welche mit vertikal abstehenden Mitnehmern versehen sind, bekannt, welche unter sich in Transferrichtung mehr als das Längsmaß des zu bearbeitenden Objektes beabstandet sind. In diesem Fall liegen die transferierten Objekte auf den besagten Ketten oder Riemen auf und können nur, mittels einer Plattform oder einer Hebestruktur mit einer Breite, bzw. einem Maß in Querrichtung zur Transferbewegung, welches kleiner als der Abstand zwischen den beiden Förderketten oder -riemen ist, in eine Position oberhalb der Transferebene gehoben werden; während ein Absenken des Objektes in einen Bereich unterhalb der Transferebene nicht möglich ist. Das genannte Transfersystem ermöglicht nicht eine präzise Positionierung der einzelnen Objekte auf der Plattform oder der Hebestruktur, insbesondere im Fall sehr schneller Transferbewegungen, weil die Positionierung der einzelnen Objekte zwischen den vorderen und hinteren Mitnehmernasen mit einer gewissen Toleranz oder einem Spiel in Transferrichtung erfolgt.

Aus der US 2005/0262802 A1 ist eine Verpackungsmaschine bekannt, bestehend aus hintereinander auf einer gemeinsamen Ebene angeordneten Baugruppen: einem ersten Beschickungsförderband außerhalb einer Verschließstation, einem zweiten Beschickungsförderband, einer Aufnahmeplatte mit Verschluss- und Hebemechanismus und einem Abführförderband, alle drei innerhalb der Verschließstation. Zwischen dem Ende des ersten Beschickungsförderbandes und dem Anfang des zweiten Beschickungsförderbandes ist eine Sonde zwecks Steuerung des Überwechselns der einzelnen zu verschließenden Behälter vom äußeren Beschickungsförderband auf das anschließende, in der Verschließstation angeordnete, Förderband vorgesehen. Oberhalb des Beschickungsförderbandes innerhalb der Verschließstation sind hydraulisch vertikal bewegliche und horizontal verfahrbare "Stopper" vorgesehen. Mittels dieser, ebenfalls von der genannten Sonde gesteuerten, "Stopper" werden die herangeführten einzelnen Behälter auf dem darunter laufenden Förderband in zueinander gleichen Abständen geordnet zurückgehalten so dass die Behälter anschließend in der vorgegebene Stückzahl, infolge horizontaler Bewegung der "Stopper" in die vorgegebenen Ausnehmungen der anschließenden Aufnahmeplatte fallen wo sie, z.B. mit einer Folie verschlossen werden können. Die verschlossenen Behälter werden gemeinsam durch eine hydraulische Hebevorrichtung aus den Ausnehmungen der Aufnahmeplatte gehoben und anschließend durch eine horizontal verfahrbare Schiebevorrichtung auf das anschließende Abführförderband gebracht. Für die in dieser Maschine eingesetzten "Stopper" ist nicht vorgesehen, dass sie die einzeln herangeführten Behältern in Zuführrichtung beschleunigen, weder können sie wirkungsvoll den harten Aufprall besonders schnell zugeführter Behälter durch progressives Verlangsamen der Geschwindigkeit der einzelnen "Stopper" verhindern um dadurch ein Rückprallen des Behälters zu vermeiden. Es ist nicht vorgesehen, dass die Bewegungen und die Geschwindigkeit der einzelnen "Stopper" aufeinander abgestimmt werden können um bei hohen Leistungen der Maschine mit sehr schnell laufenden "Stoppern" die zu bearbeitenden, einzeln herangeführten Objekte an der Vorderseite durch progressive Verlangsamung sanft abfangen zu können und auf der Rückseite mit dem entsprechenden "Stopper" stark beschleunigen zu können um das bearbeitete Objekt in kürzester Zeit von der Aufnahmeplatte/Plattform auf das anschließende Abführförderband zu schieben. Weiter ist auch eine präzise Positionierung der Behälter auf einer Aufnahmeplatte/Plattform, ohne Ausnehmungen nicht möglich da eine Positionierung durch spielfreies Klemmen der Behälter zwischen den "Stoppern" nicht vorgesehen ist. Die über der Durchlaufebene der Behälter angeordneten "Stopper" und die über der Aufnahmeplatte angeordnete Schiebevorrichtung ermöglichen es nicht einen Bearbeitungsbereich oberhalb des besagten Beschickungsförderbandes und/oder der Aufnahmeplatte vorzusehen.

Aus der US 2016/0362257 A1 ist eine Maschine zum Gruppieren von Objekten in unterschiedliche Anordnungen bekannt. Eine Vielzahl einzelner Objekte werden durch ein Förderband der Maschine einzeln zugeführt wo sie hintereinander in Reihenanordnung in entsprechende Aufnahmeelemente in einer begrenzten Anzahl (z.B. 5 Objekte) eingesetzt werden. Diese Aufnahmeelemente werden in mehreren Reihen von nebeneinander angeordneten Förderriemen bewegt und in einer Entleerungsstation von entsprechenden Mehrfachgreifern, durch Herausziehen nach oben, entleert und auf ein Förderband in Reihenanordnung (z.B. 5 Objekte nebeneinander) abgelegt. Anschließend werden die einzelnen Reihenanordnungen auf einem Förderband zu Gruppenanordnungen mit mehreren Reihen (z.B. 4 Reihen zu je 5 Objekten= insgesamt 20 Objekte) zusammengruppiert. In dieser Maschine werden mehrere Mehrfachgreifer für die Reihenanordnung, unabhängig voneinander, entlang Führungsschienen, durch spezifische Zahnriementriebe bewegt welche von jeweils spezifischen Motoren angetrieben sind. In den Mehrfachgreifern sind die Objekte elastisch festgehalten, sie liegen nicht frei auf einem laufenden Förderband oder auf einer Plattform auf, ihre Bewegungen und die Geschwindigkeit sind zwangsläufig von der Bewegung und der Geschwindigkeit des Mehrfachgreifers und des entsprechenden Zahnriemens abhängig. Es ist nicht vorgesehen, dass eines der Objekte oder der Mehrfachgreifer mit den Objekten durch Mitnehmer und/oder Rückhalteelemente welche von Zahnriemen abstehen in Ihrer Bewegung von einem Förderband auf das nächste beschleunigt, verlangsamt oder arretiert werden könnte.

Die Erfindung stellt sich die Aufgabe eine Transfervorrichtung für die vorgenannte Anwendung zu schaffen welche den zuverlässigen Transfer und die präzise Positionierung einzelner Objekte oder gestapelter, gegenseitig einrastender, Objekte welche einen relativ niedrigen Stapel bilden und eine Bearbeitung in einem Bereich oberhalb oder/und unterhalb der Transferebene in Maschinen mit sehr hoher Leistung ermöglicht, welche durch die hohe Transfer- und Positioniergeschwindigkeit sowie, durch hohe Betriebssicherheit und niedriger Wartung ermöglicht wird.

Zur Lösung dieser Aufgabe schlägt die Erfindung den Einsatz eines Paares von Rückhalteköpfen vor welche an der vorderen Querseite bezogen auf die Zuführrichtung der zu bearbeitenden Objekte wirken sowie eines Paares von Mitnehmerköpfen welche an der hinteren Querseite der selben Objekte wirken. Mittels der besagten Köpfe welche spezifisch voneinander unabhängig gesteuert werden, erfolgt der Transfer des zu bearbeitende Objektes mittels bekannter linearer Beschickungsvorrichtungen in Richtung einer Plattform oder einer Hebe-, bzw. Absenkstruktur und, nach erfolgter Bearbeitung am Objekt, in Richtung einer bekannten linearen Abführvorrichtung welche in Linie mit der bekannten Beschickungsvorrichtung angeordnet ist. Die besagten Mitnehmer-, bzw. Rückhalteköpfe, sind verfahrbar, parallel zur Transferrichtung, beidseitig der Beschickungs-, und der Abführvorrichtung, sowie beidseitig der Plattform oder der Hebe-/Absenkstruktur, längs Gleitführungen verfahrbar gelagert. Jede der genannten Köpfe ist mit einem horizontal, quer zur Transferrichtung bewegbaren, Zapfen ausgestattet, welcher eine ausgefahrene aktive, in den Bereich des Durchlaufs der transferierten Objekte ragende, bzw. eine passive, aus dem Durchlaufsbereich zurückgezogene, Position einnehmen kann.

Die Erfindung schließt nicht aus, dass der genannte Zapfen von einem an den genannten Köpfen, in einer zur Transferebene senkrechten Ebene oder komplanar zur Transferebene, schwenkbar gelagerten Element ersetzt wird.

Beidseitig an den Vorrichtungen für den linearen Transfer und an der vertikal bewegbaren Plattform sind jeweils ein Rückhaltekopf und ein Mitnehmerkopf vorgesehen, welche beide verfahrbar an mindestens einer Führung gelagert sind, wobei jeder von einem eigenen Zahnriemen oder einer Kette welche von einem spezifischen Motor angetriebenen wird, bewegt wird. Beidseitig wirkt der Mitnehmerzapfen im hinteren Bereich des zu transferierenden Objekts, während der Rückhaltezapfen im vorderen Bereich des genannten Objekts wirkt. Die Rückhaltezapfen können in ausgefahrener aktiver Position für das, von den Mitnehmerzapfen geschobene, Objekt eine Abbrems- und eine Anhaltefunktion ausüben, mit der Möglichkeit einen Aufprall des, mit hoher Geschwindigkeit, zugeführten Objekts mittels einer progressiven Verlangsamung der vorderen Rückhaltezapfen, bezogen auf die Zuführgeschwindigkeit des Objektes, während der Annäherungsfase an die besagten Rückhaltezapfen abzudämpfen, wobei ein mögliches Zurückprallen des Objektes bei dessen Auftreffen auf die Rückhaltezapfen vermieden wird. Infolge der genannten Verlangsamung erfolgt, sobald das Objekt die Position auf der Plattform der Hebe-/Absenkvorrichtung eingenommen hat, das Arretieren der Bewegung des Objekts mittels der an der Vorderseite des Objekts, quer zur Transferrichtung wirkenden, zwei Rückhaltezapfen. Insbesondere während der Abbrems- und Arretierfase des Objektes wirken die hinteren Mitnehmerzapfen mit einem gewissen Druck auf das Objekt welches vorne an den beiden Rückhaltezapfen aufliegt, wobei ein eventuelles Spiel eliminiert wird. Das zwischen den Mitnehmerzapfen und den Rückhaltezapfen, ohne Spiel gehaltene Objekt wird auf der Plattform oder auf der vertikal bewegbaren Hebe-/Absenkstruktur positioniert, wo es durch Rückziehen aller Zapfen freigegeben wird um vertikal in einen Bearbeitungsbereich, oberhalb oder/und unterhalb der Transferebene, bewegt zu werden. Während der besagten vertikalen Bewegungen und/oder der Durchführung der Bearbeitung am Objekt werden die eingezogenen Mitnehmerzapfen in die Startposition rückgeführt so dass sie nicht das Zuführen des nächsten Objektes behindern welches, nach Rückzug eines bekannten Rückhalteelements, von einer Zuführvorrichtung oder einem -förderband auf die Beschickungsvorrichtung der Transfervorrichtung wechselt. Sobald das erste Objekt, nach seiner

Bearbeitung, mittels der Plattform in die Transferebene rückgeführt wird, wirkt auf dieses, mittels der ausgefahrenen Rückhaltezapfen, ein Beschleunigungsschub in Richtung der anschließenden Abführvorrichtung; die Rückhaltezapfen werden anschließend in die Ausgangsstellung rückgeführt wo sie in ausgefahrener Position auf das nächste herangeführte Objekt warten an welchem sie, wie bereits beschrieben, das Verlangsamen, das Arretieren und die Positionierung des Objekts auf der vertikal bewegbaren Plattform durchführen.

Anschließend, während das erste Objekt von der Abführvorrichtung bewegt wird und das zweite Objekt auf der Plattform positioniert wird und/oder bearbeitet wird, wird ein drittes Objekt, infolge Rückzug der bekannten Arretiervorrichtung, vom Zuführförderband oder von der Zuführvorrichtung auf die Beschickungsvorrichtung geschoben wo die Mitnehmerzapfen eine zurückgezogene Ausgangsstellung und die Rückhaltezapfen eine ausgefahrene Ausgangsstellung einnehmen, um anschließend die Abbremsfase, die Arretier-: und Positionierfase am dritten herangeführten Objekt ausüben zu können.

Sobald das nachfolgende Objekt auf der Beschickungsvorrichtung die Ausgangsposition der zurückgezogenen Mitnehmerzapfen passiert hat, werden die entsprechenden Zapfen ausgefahren um das vorne an diesen anliegende Objekt, nach einer bereits beschriebenen Verlangsamungsfase, gegen die ausgefahrenen Rückhaltezapfen auf die Plattform der Hebe-/Absenkvorrichtung zu schieben wo, nach Rückziehen aller Zapfen das Objekt, infolge seiner exakten Positionierung, wie bereits für das erste Objekt beschrieben, frei gelassen wird.

Eventuell ist die Plattform mit Anhebe-/Absenkvorrichtung, welche zwischen der Beschickungsvorrichtung der zu bearbeitenden Objekte und der Abführvorrichtung für den Abtransport der Objekte nach erfolgter Bearbeitung angeordnet ist, bezogen auf die von den besagten linearen Fördervorrichtungen definierten Ebene, in einer leicht niedrigeren Ebene angeordnet und können vorteilhafterweise in den Übergangsbereichen, zwischen den besagten Vorrichtungen und der Plattform, Führungen oder Leitbleche zwecks Verhindern von Hemmungen während des Durchlaufs der transferierten Objekte, vorgesehen sein.

Die Erfindung schließt nicht aus, dass die Paare der Mitnehmerköpfe und der Rückhalteköpfe, anstatt auf einer einzigen gemeinsamen Führung auf zwei spezifischen Führungen laufen, wodurch in diesem Fall auch ein Lauf der Köpfe in Gegenrichtung ermöglicht wird, wobei diese auch die Mitnehmer- und Rückhaltefunktion abwechselnd übernehmen können, bzw. abwechselnd an der vorderen oder hinteren quer zur Transferrichtung verlaufenden Seite des zu bearbeitenden Objekts, wirken können.

Die erfindungsgemäßen Rückhalte- und Mitnehmerköpfe ermöglichen einen sehr schnellen Transfer, von der bekannten linearen Beschickungsvorrichtung auf die Plattform oder die Hebe-/Absenkvorrichtung sowie von dieser auf die bekannte lineare Abführvorrichtung, ohne Rückprall oder Hemmungen an den zu bearbeitenden Objekten. Weiters ermöglichen die selben Köpfe das präzise und reguläre Positionieren der zu bearbeitenden Objekte, ausgerichtet nach der Transferrichtung auf der Plattform oder der Hebe- oder Absenkvorrichtung, was die Grundbedingung für einen hemmungsfreien Ablauf des Transfers und und der Positionierung im Bearbeitungsbereich unterhalb und/oder oberhalb der Transferebene ist.

Die Erfindung wird nachfolgend anhand eines, in den beigelegten Zeichnungen schematisch dargestellten, vorzuziehenden Ausführungsbeispiels einer erfindungsgemäßen Transfervorrichtung für Maschinen deren Arbeitsbereich unterhalb und/oder oberhalb der Transferebene liegt, näher erklärt.

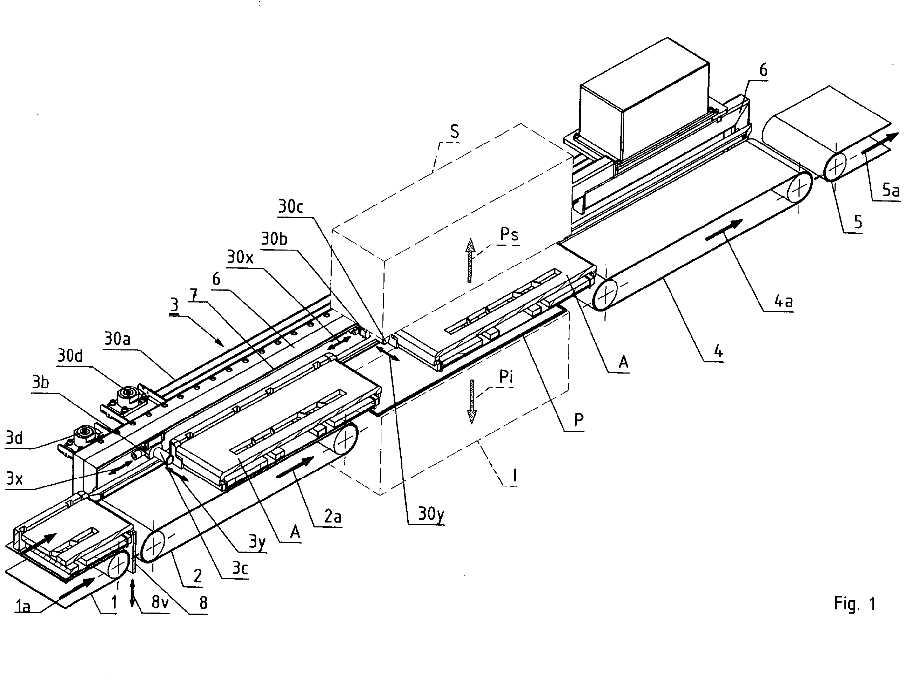

Die Fig. 1 zeigt eine perspektivische Darstellung des Längsschnittes gemäß einer senkrechten, durch die Mittellinie verlaufende, Schnittebene durch eine Maschine für die Bearbeitung von Kunststoffsteigen mit klappbaren Seitenwänden in einem Bearbeitungsbereich unterhalb oder/und oberhalb der Transferebene der Steigen mittels erfindungsgemäßer Transfer- und Positionierungsvorrichtung.

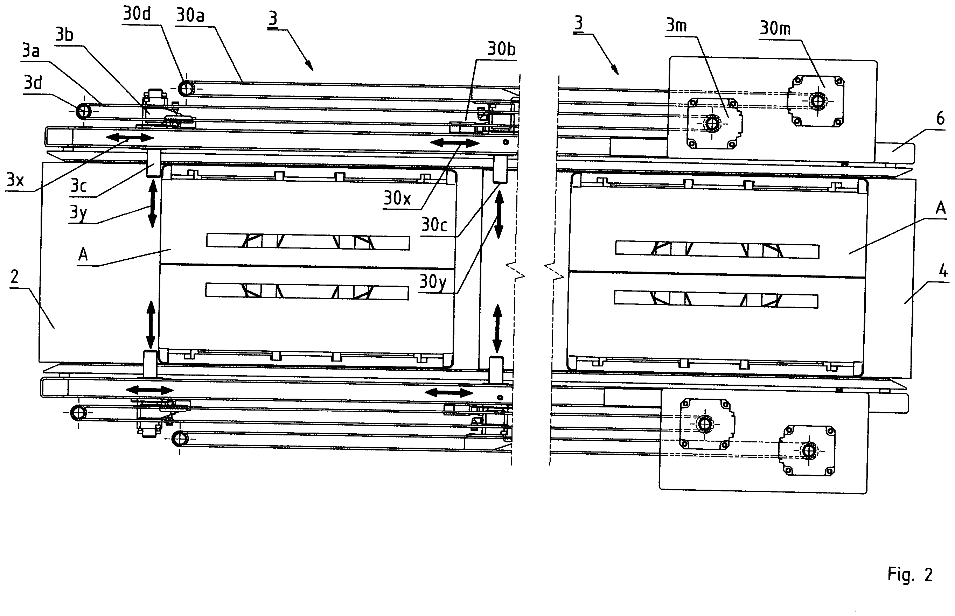

Die Fig. 2 zeigt eine Draufsicht auf den vorderen und den hinteren Teil der, in Fig. 1 dargestellten, erfindungsgemäßen Transfer- und Positionierungsvorrichtung.

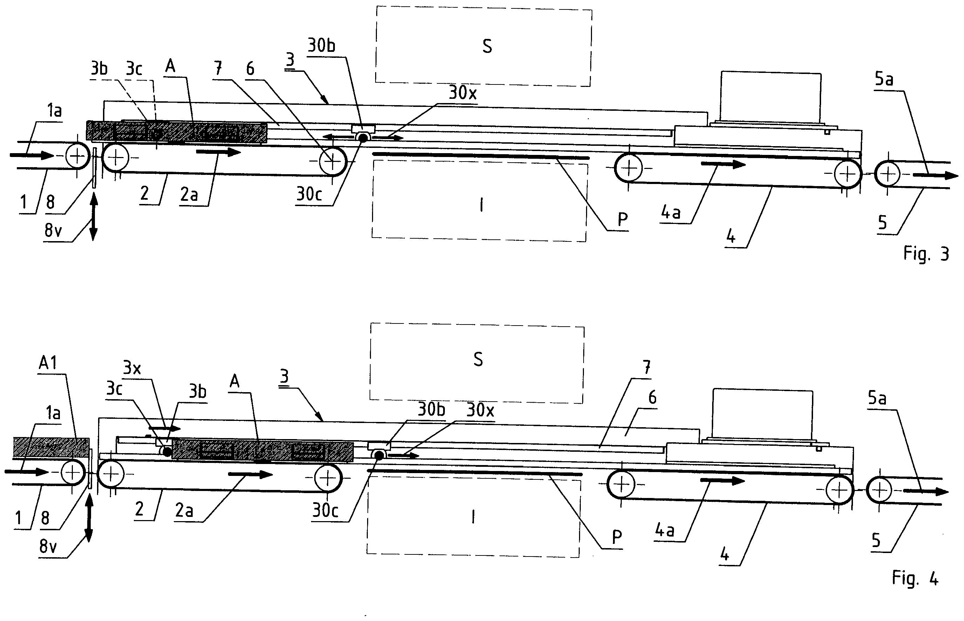

Die Fig. 3 zeigt das Funktionsschema der erfindungsgemäßen, in Fig. 1 dargestellten Transfer- und Positionierungsvorrichtung in der Fase der Beschickung mit einer ersten Steige welche von einer bekannten Zuführvorrichtung auf eine Plattform mit Hebe-/Absenkvorrichtung zu transferieren ist, mit dem Paar der vorderen ausgefahrenen Rückhaltezapfen und dem Paar der hinteren eingefahrenen Mitnehmerzapfen, beide in Ausgangsstellung während der ersten Transferfase.

Die Fig. 4 zeigt das Funktionsschema der erfindungsgemäßen, in Fig. 3 dargestellten Transfervorrichtung, mit einer nachfolgenden zweiten, auf dem Zuführförderband, mittels bekannter Rückhaltevorrichtung zurückgehaltenen, Steige und mit der ersten Steige auf der linearen Beschickungsvorrichtung infolge Transfer, mittels der ausgefahrenen Mitnehmerzapfen, in Richtung der anschließenden, vertikal bewegbaren Plattform, während die ausgefahrenen Rückhaltezapfen soeben einen Beschleunigungsschlag ausgeführt haben um eine eventuelle vorhergehende Steige, nach deren Bearbeitung (nicht präsent während des Ablaufs der Fase für die erste Steige) von der Plattform in Richtung Abführvorrichtung zu transferieren.

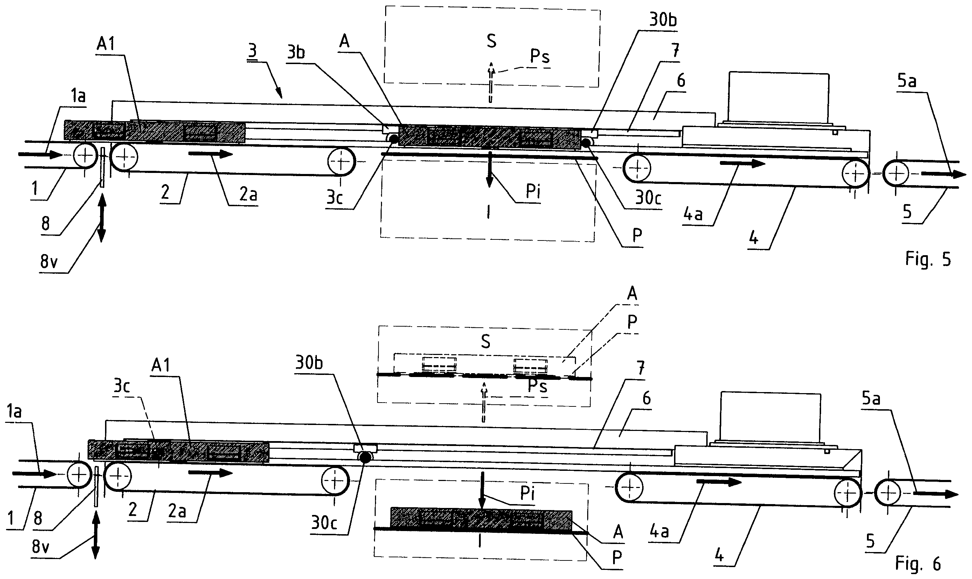

Die Fig. 5 zeigt das Funktionsschema der erfindungsgemäßen, in den Fig. 3 und 4 dargestellten, Transfervorrichtung während der Fase der Positionierung der ersten auf die Plattform mit Hebe-/Absenkvorrichtung transferierten Steige, zwischen den vorderen Rückhaltezapfen und den hinteren Mitnehmerzapfen geklemmten, ersten Steige; es ist die bekannte Rückhaltevorrichtung in abgesenkter Position und der Transfer der folgenden zweiten Steige vom Zuführförderband auf die lineare Beschickungsvorrichtung sichtbar.

Die Fig. 6 zeigt das Funktionsschema der erfindungsgemäßen, in den Fig. 3 bis 5 dargestellten, Transfervorrichtung mit der Absenkfase der Plattform in den, bezogen auf die Transferebene, unteren Bearbeitungsbereich und mit der zweiten Steige in Beschickungsfase, welche bereits für die erste Steige in Fig. 3 beschrieben worden ist.

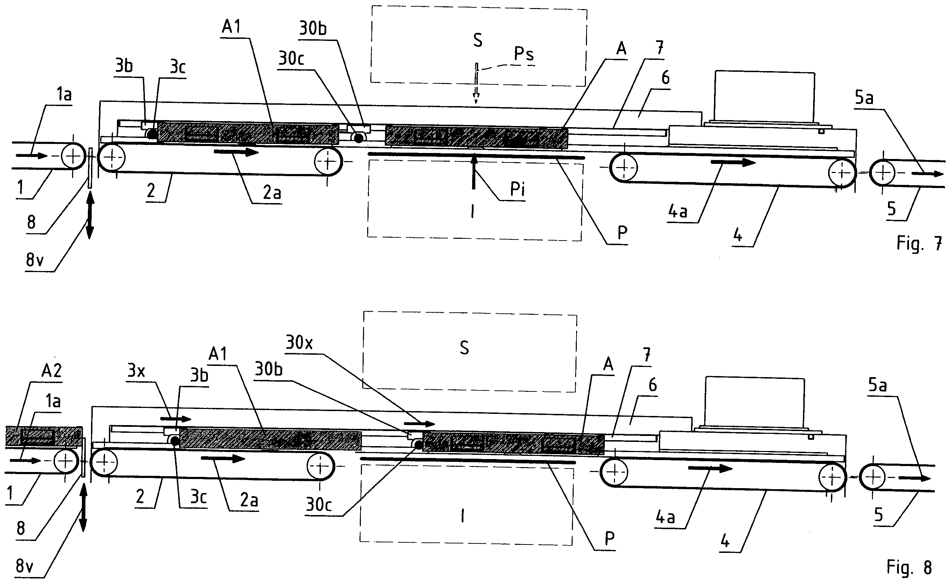

Die Fig. 7 zeigt das Funktionsschema der erfindungsgemäßen, in den Fig. 3 bis 6 dargestellten, Transfervorrichtung, mit der Plattform, zusammen mit der ersten Steige, nach Bearbeitung dieser im unteren Bearbeitungsbereich, ausgerichtet mit der Transferebene, mit der nachfolgenden zweiten Steige welche auf der Beschickungsvorrichtung durch die ausgefahrenen Mitnehmerzapfen geschoben wird, während die vorderen Rückhaltezapfen bereit sind um einen Beschleunigungsschub auf die erste Steige in Richtung Abführvorrichtung auszuführen.

Die Fig. 8 zeigt das Funktionsschema der erfindungsgemäßen, in den Fig. 3 bis 7 dargestellten, Transfervorrichtung mit einer dritten, von der Rückhaltevorrichtung auf dem Zuführförderband zurückgehaltenen Steige, mit der zweiten Steige auf der Beschickungsvorrichtung durch die ausgefahrenen Mitnehmerzapfen in Richtung der vertikal bewegbaren Plattform geschoben und mit den ausgefahrenen Rückhaltezapfen welche auf die erste Steige auf der Plattform einen Beschleunigungsschub ausüben um deren Transfer von der Plattform auf die bekannte lineare Abführvorrichtung zu erreichen.

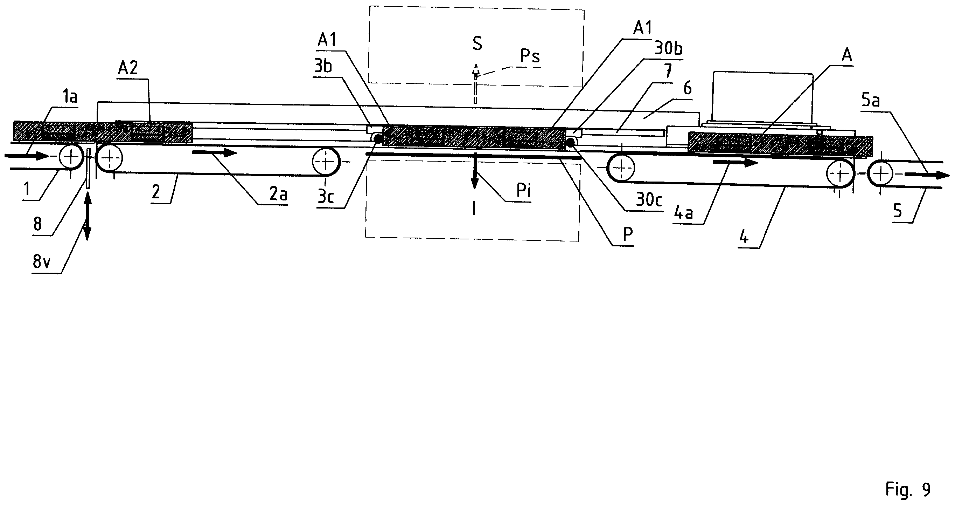

Die Fig. 9 zeigt das Funktionsschema der erfindungsgemäßen, in den Fig, 3 bis 8 dargestellten Transfervorrichtung mit der ersten von der Abführvorrichtung transferierten Steige, mit der zweiten, zwischen den ausgefahrenen Rückhalte- und den ausgefahrenen Mitnehmerzapfen geklemmten, Steige während deren Positionierung auf der Plattform und mit der dritten Steige während der Übergangsfase vom Zuführförderband auf die lineare Beschickungsvorrichtung.

Die erfindungsgemäße Transfer- und Positionierungsvorrichtung besteht wesentlich aus einer bekannten linearen Beschickungsvorrichtung, wie z.B. einem Förderband 2, einer Plattform P oder einer bekannten vertikal bewegbaren Hebe-/Absenkstruktur welche in eine oder in beide Bearbeitungsbereiche Ps, Pi oberhalb S und/oder unterhalb I der Transferebene bewegbar ist, aus einer linearen bekannten Abführvorrichtung, wie z.B. einem Förderband 4 welche alle unter sich nach einer horizontalen Ebene ausgerichtet sind und zusätzlich aus Mitnehmerköpfen 3b und Rückhalteköpfen 30b welche parallel zur Transferrichtung der zu bearbeitbaren Objekte, z.B. der Steigen A, A1, A2, verfahrbar 2a, 4a gelagert sind. Die besagten Mitnehmerköpfe 3c und Rückhalteköpfe 30c sind an Zahnriemen 3a, 30a oder an anderen flexiblen Übertragungsorganen befestigt welche über Umlenkrollen 3d, 30d laufen, und von spezifischen Motoren 3m, 30m, entlang einer einzigen gemeinsamen Führung 7 angetrieben sind, wobei diese an beiden Längsseiten der besagten Förderbänder 2, 4 und der besagten Plattform P vorgesehen ist und von einem Profil welches sich wesentlich über die gesamte, bzw. über einen Teil, der Länge der Förderbänder 2, 4 und der Plattform P erstreckt, getragen wird. In den oberen S oder unteren I Bearbeitungsbereichen können, z.B. rotierende Schleuderkäfige für das Trocknen der Steigen A, A1, A2 welche von einer Waschanlage herbeigeführt werden, vorgesehen sein, dabei hat die Plattform P in diesem Fall die, zum Beladen des Schleuderkäfigs mit Steigen, geeignete Form und Struktur.

Die Rückhalteköpfe 30b und die Mitnehmerköpfe 3b können die identische Konstruktion aufweisen und sind mit einem Rückhaltezapfen 30c, bzw. einem Mitnehmerzapfen 3c ausgestattet, welche z.B. pneumatisch oder hydraulisch betätigbar 30y, 3y sind um in Richtung des Durchlaufbereichs der Steigen A, A1, A2 ausgefahren, bzw. aus diesem Bereich eingefahren zu werden, um in ausgefahrener Position auf die quer zur Transferrichtung liegende Seite der Steigen A, A1, A2 in einer Ebene welche wenig höher als die Auflageebene der Steigen auf den Förderbändern 2, 4, bzw. auf der Plattform P ist, zu wirken.

Gemäß einer Weiterentwicklung des Erfindungsgedankens, können die besagten Mitnehmerköpfe 3d, bzw. Rückhaltköpfe 30b auch auf spezifischen Führungen gelagert sein so dass auf der selben Seite der Transfervorrichtung jeder der Köpfe, für gewisse Transferstrecken der Steigen A, A1, A2, sei es für die Mitnehmerfunktion als auch für die Rückhaltefunktion eingesetzt werden kann.

Zwecks Erleichterung des Überwechselns der Steigen A, A1, A2 vom Beschickungsförderband 2 auf die Plattform P, bzw. von dieser auf das nachfolgende Abführförderband 4 und zwecks Verhinderung von Hemmungen in den besagten Bereichen können entsprechende Führungen und/oder Leitbleche vorgesehen sein.

Die Steigen A, A1, A2 werden der Transfervorrichtung auf einem Zuführförderband 1 zugestellt, an dessen Ende eine bekannte vertikal bewegbare 8v Rückhaltevorrichtung 8 vorgesehen ist um die Zustellung der Steigen zu unterbrechen, bzw. um das Überwechseln dieser auf das anschließende Beschickungsförderband 2 innerhalb Zeitintervallen zu gestatten welche von der Leistungsfähigkeit der anschließenden Transfervorrichtung, bzw. der Bearbeitungsvorrichtungen, abhängig sind. Sobald die erste Steige A vom Beschickungsförderband 2 der Transfervorrichtung zugeführt wird, befinden sich der Mitnehmerkopf 3b mit dem zurückgefahrenen Mitnehmerzapfen 3c und der Rückhaltekopf 30b mit dem ausgefahrenen Rückhaltezapfen 30c in Ausgangsstellung. Der Kopf 3b mit dem eingefahrenen Mitnehmerzapfen 3c befindet sich effektiv im Anfangsbereich des Beschickungsförderbandes 2, während der Kopf 30b mit dem ausgefahrenen Rückhaltezapfen im Endbereich des selben Förderbandes 2 und, um die Länge der Steige A (Fig. 3), beabstandet vom ersten Zapfen 3c positioniert ist. Sobald die erste vom Förderband 2 transportierte 2a Steige A mit Ihrer hinteren Querseite die Ausgangsposition des Mitnehmerzapfens 3c passiert hat, wird dieser ausgefahren um auf die Steige A einen Schub 2c, welcher schneller als die Transferbewegung 2a ist, auszuüben. Vor dem Kontakt der vorderen Querseite der ersten, mit hoher Geschwindigkeit bewegten 3x Steige A mit den ausgefahrenen Rückhaltezapfen 30c welche beidseitig wirken, werden diese in die selbe Richtung des Schubes 3x bewegt 30x jedoch, bezogen auf diesen, mit progressiv verlangsamter Geschwindigkeit um einen harten Aufprall an den Rückhaltezapfen 30c und einen eventuellen Rückprall der Steige A zu vermeiden. Währen der besagten Verlangsamung der Bewegung 30x erreicht die Steige A die Position auf der Plattform P wobei diese nun zwischen den vorderen Rückhaltezapfen 30c und den hinteren Mitnehmerzapfen 3c geklemmt ist um in einer präzisen vorbestimmten Position auf der Plattform P arretiert zu werden; während dieser Arbeitsfasen kann eine zweite Steige A1 vom Zuführförderband 1, infolge Rückzug 8v der Rückhaltevorrichtung 1 (Fig. 5), zugeführt werden. Die erste Steige A wird anschließend, durch Einfahren 3y, 30y aller Zapfen 3c, 30c, freigegeben um, mittels der Plattform P in den unteren Bearbeitungsbereich I abgesenkt Pi oder in den oberen Bearbeitungsbereich S angehoben Ps zu werden wo die Steige bearbeitet wird (Fig. 6), z.B. z.B. zwecks Trocknung, in einen Schleuderkäfig geladen wird.

Während der besagten Hebe-/Absenkfasen und/oder Bearbeitungsfasen der ersten Steige A, werden die Mitnehmerzapfen 3c eingefahren 3y und in die Ausgangsposition am Anfang des Beschickungsförderbandes 2 zurückgeführt, während die Rückhaltezapfen 30c, unter Beibehaltung der ausgefahrenen Position, in die Ausgangsposition im Bereich zwischen dem Endbereich des Beschickungsförderbandes 2 und dem Anfangsbereich der Plattform P (Fig. 7) zurückgeführt werden. anschließend üben die ausgefahrenen Rückhaltezapfen 30c auf die Steige A einen Beschleunigungsschub 30x in Richtung Abführförderband 4 aus, während die Mitnehmerzapfen 3c die zweite Steige A1 in Richtung Plattform P schieben 3x und eine dritte Steige A2 von der Rückhaltevorrichtung 8 auf dem Zuführförderband 1 (Fig. 8) zurückgehalten wird.

Anschließend verrichten die Rückhaltezapfen 30c, nach dem Beschleunigungsschub 30x auf die Steige A, die bereits beschriebene Verlangsamungs- und Arretierfase indem sie sich mehr oder weniger nah an der Vorderseite der Steige A1 positionieren um die Anfangsposition der bereits genannten Verlangsamungsfase einzunehmen und um anschließend gegen die vordere Querseite der zweiten Steige A1 zu wirken welche von den Mitnehmerzapfen 3x bewegt 3c wird um diese, zwischen den Zapfen 3c und 30c geklemmt, auf der Plattform P zu positionieren, während die erste Steige A auf dem Abführförderband 4 in Richtung Förderband 5 bewegt wird, welches nicht Teil der erfindungsgemäßen Transfervorrichtung ist (Fig. 9), um z.B. einer Stapelvorrichtung oder einer weiteren Bearbeitung zugeführt 5a zu werden.

Das erfindungsgemäße Transferverfahren umfasst die folgenden Fasen:
- Überwechseln einer ersten zu bearbeitenden Steige A von einer Zuführvorrichtung oder einem Zuführförderband 1 auf ein Beschickungsförderband 2, infolge Betätigung 8v einer Rückhaltevorrichtung 8 welche zwischen den beiden Förderbändern 1 und 2 in Abhängigkeit der Leistungsfähigkeit der Transfervorrichtung und der Vorrichtung welche an der Steige die Bearbeitung durchführt, gesteuert wird (Fig. 3);
- Transfer 3x der ersten Steige A in Richtung stillstehende Plattform P mittels der ausgefahrenen Mitnehmerzapfen 3c, wobei die Auflagefläche der Plattform mit der Transferebene der Transfervorrichtung komplanar ist;
- Verlangsamung der von den Mitnehmerzapfen 3c ausgeübten Transferbewegung 3x indem die ausgefahrenen Rückhaltezapfen 30c, welche anfänglich von der vorderen Querseite der Steige A beabstandet sind, mit einer progressiv verlangsamten Geschwindigkeit, bezüglich der Mitnehmerzapfen 3c, jedoch in die selbe Richtung dieser, bewegt werden um dadurch den genannten Abstand progressiv zu vermindern und einen schnellen Aufprall der Steige auf die Zapfen 30c und somit einen Rückprall der Steige A, zu vermeiden (Fig. 4);
- Klemmen der ersten Steige A zwischen den Mitnehmerzapfen 3c und den Rückhaltezapfen 30c und präzise Positionierung auf der Plattform P (Fig. 5) mit der Möglichkeit zeitgleich eine zweite Steige A1 dem Beschickungsförderband 2 zuzuführen;
- Freigabe der ersten Steige A durch Einfahren 3y, 30y aller Zapfen 3c, 30c;
- vertikale Bewegung PS, Pi der Plattform P zusammen mit der Steige A in den Bearbeitungsbereich S, I (Fig. 6);
- Durchführung der Bearbeitungen an der Steige A, mit der Möglichkeit der Zuführung 2a der zweiten Steige Alin Richtung der Plattform P (Fig. 6);
- Rückpositionierung der ersten Steige A in die Transferebene durch die vertikale Bewegung PS, Pi, mit eventuellem Positionieren und Ausfahren der Mitnehmerzapfen 3c hinter der zweiten Steige A1;
- Transfer 30x der ersten Steige A von der Plattform P auf das Abführförderband 4 indem von den Rückhaltezapfen 30c ein starker Beschleunigungsschub 30x auf die hintere Querseite der Steige A ausgeübt wird und eventuell die zweite Steige A1 in Richtung Plattform P geschoben 3x wird während eine dritte Steige A2 mittels der Rückhaltevorrichtung 8 am Ende des Zuführförderbands 1 zurückgehalten wird (Fig. 8);
- Transfer 4a der ersten Steige A in Richtung Abführförderband 5 für eine eventuelle Stapelung oder anschließende Bearbeitung; mit eventueller Zuführung 2a einer dritten Steige A2 und Positionierung der zweiten Steige A1 auf der Plattform P (Fig. 9).

## Patentansprüche

1. Transfervorrichtung für Maschinen mit unterhalb oder/und oberhalb der Transferebene vorgesehenem Bearbeitungsbereich (I, S), wobei die Vorrichtung aus einer linearen Beschickungsvorrichtung (2) und einer linearen Abführvorrichtung (4) für die zu bearbeitenden Objekte (A, A1, A2) und einer, zwischen den genannten bekannten Beschickungs-/Abführeinrichtungen (2, 4) vorgesehene, Plattform (P) für das Anheben (Ps) und/oder Absenken (Pi) der besagten Objekte in eine oder in beide Bearbeitunsbereiche (S, I), besteht, **dadurch gekennzeichnet, dass** beidseitig entlang der besagten bekannten Beschickungs-/Abführvorrichtungen (2, 4) und längs der Plattform (P), in einer Ebene parallel zur Transferebene der Objekte, innerhalb des Durchlaufbereiches dieser, ein Mitnehmerkopf (3b) mit Mitnehmerzapfen (3c) und ein Rückhaltekopf (30b) mit Rückhaltezapfen (30c), parallel zur Beschickungs- und Abführbewegung (2a, 4a) der Objekte (A, A1, A2) verfahrbar (3x, 30x) an einer einzigen Führung (7) an beiden Längsseiten der besagten Vorrichtungen (2, 4) und der Plattform (P) gelagert ist, dass die besagten Zapfen (3c, 30c) aus- und einfahrbar (3y, 30y) sind um eine aktive ausgefahrene Position einnehmen zu können, indem sie in den Durchlaufbereich der transferierten Objekte ragen, und eine passive zurückgefahrene Position einnehmen können, indem sie nicht den Durchlauf der besagten Objekte behindern und dass jeder der besagten Köpfe (3b, 30b) mit einem flexiblen spezifischen Übertragungsmittel (3a, 30a) verbunden ist welches jeweils von einem spezifischen Motor (3m, 30m) bewegt wird.

2. Transfervorrichtung gemäß Anspruch 1, **dadurch gekennzeichnet, dass** die Mitnehmerzapfen (3c) in ausgefahrener aktiver Position auf die hintere, quer zur Transferrichtung verlaufenden, Seite der Objekte wirken, während die Rückhaltezapfen (30c) in ausgefahrener aktiver Position auf die vordere Querseite der selben Objekte wirken, dass die selben Rückhaltezapfen (30c), nach Bearbeitung am auf der Plattform (P) aufliegenden Objekt, auf dessen hintere Querseite einen Beschleunigungsschub (30x) in Richtung der Abführvorrichtung (4) auzsüben und dass die Mitnehmerköpfe und die entsprechenden Zapfen (3c) von den Rückhalteköpfen (30b) und den entsprechenden Zapfen (30c) unabhängig betätigt werden können.

3. Transfervorrichtung gemäß Anspruch 1, **dadurch gekennzeichnet, dass** die Mitnehmerköpfe (3b) und die Rückhalteköpfe (30 b) an beiden Seiten der Transportvorrichtungen (2, 4) und der Plattform (P) auf zwei spezifischen separaten, zueinander parallelen Führungen (7) verfahrbar (3x, 30x) gelagert sind, dass die entsprechenden Mitnehmerzapfen (3c) und Rückhaltezapfen (30c) in zueinander parallelen und beabstandeten Ebenen wirken so dass sie, sei es zwecks Mitnehmen als auch zwecks Rückhalten der zu transferierenden Objekte (A, A1, A2) gesteuert werden können.

4. Transfervorrichtung gemäß Anspruch 1 und gemäß Anspruch 4, **dadurch gekennzeichnet, dass** die längs der separaten spezifischen Führungen (7) verfahrbar gelagerten Mitnehmerzapfen (3b) und Rückhaltezapfen (30b) mit dem Endbereich der entsprechenden Zapfen (3c, 30c) in einer einzigen Ebene wirken.

5. Transfervorrichtung gemäß Anspruch 1, **dadurch gekennzeichnet, dass** die anheb- und absenkbare Plattform (P) durch eine Auflagestruktur ersetzt ist welche geeignet ist die einzelnen transferierten Objekte (A, A1, A2) aufzunehmen welche mittels Mitnehmerzapfen (3c) und Rückhaltezapfen (30c) von der Beschickungsvorrichtung (2) auf die besagte Struktur und von dieser auf die anschließende Abführvorrichtung (4) transferiert werden und geeignet ist die einzelnen Objekte in eine Bearbeitungsvorrichtung, welche in mindestens einem der Bearbeitungsbereiche (S, I) vorgesehen ist, zu laden oder sie in der besagten Vorrichtung während ihrer Bearbeitung festzuhalten.

6. Transfervorrichtung gemäß Anspruch 1, **dadurch gekennzeichnet, dass** die von einer bekannten Beschickungsvorrichtung (2) auf eine Plattform (P) oder eine vertikal bewegbare (PS, Pi) Struktur transferierten Objekte (A, A1, A2) ununterbrochen von einer bekannten Züführvorrichtung (1) zugeführt (1a) werden welche, zwecks Unterbrechung der Zufuhr der einzelnen Objekte auf die anschließende Beschickungsvorrichtung (2), in Abhängigkeit der Leistung der Transfervorrichtung und des Bearbeitungsablaufes an den transferierten Objekten, mit einer Rückhaltevorrichtung (8) ausgestattet ist.

7. Transfervorrichtung gemäß Anspruch 1, **dadurch gekennzeichnet, dass** der Durchlauf der zu bearbeitenden Objekte (A, A1, A2) von der Beschickungsvorrichtung (2) auf die Plattform (P), bzw. auf die Hebe-/Absenkstruktur und von dieser auf die Abführvorrichtung (4) auf Führungen oder Leitblechen erfolgt.

8. Transfer- und Positionierungsverfahren durchführbar mittels einer Transfer- und Positionierungsvorrichtung gemäß Anspruch 1, **dadurch gekennzeichnet, dass** es folgende Fasen umfasst:
- Überwechseln einer ersten zu bearbeitenden Steige (A) von einer Zuführvorrichtung oder einem Zuführförderband (1) auf ein Beschickungsförderband (2), infolge Betätigung (8v) einer Rückhaltevorrichtung (8) welche zwischen den beiden Förderbändern (1, 2) in Abhängigkeit der Leistungsfähigkeit der Transfervorrichtung und der Vorrichtung welche an der Steige die Bearbeitung durchführt, gesteuert wird (Fig. 3);
- Transfer (3x) der ersten Steige (A) in Richtung stillstehende Plattform (P) mittels der ausgefahrenen Mitnehmerzapfen (3c), wobei die Auflagefläche der Plattform mit der Transferebene der Transfervorrichtung komplanar ist;
- Verlangsamung der von den Mitnehmerzapfen (3c) ausgeübten Transferbewegung (3x) indem die ausgefahrenen Rückhaltezapfen (30)c, welche anfänglich von der vorderen Querseite der Steige (A) beabstandet sind, mit einer progressiv verlangsamten Geschwindigkeit, bezüglich der Mitnehmerzapfen (3c), jedoch in die selbe Richtung dieser, bewegt werden um dadurch den genannten Abstand progressiv zu vermindern und einen schnellen Aufprall der Steige auf die Zapfen (30c) und somit einen Rückprall der Steige (A), zu vermeiden (Fig. 4);
- Klemmen der ersten Steige (A) zwischen den Mitnehmerzapfen (3c) und den Rückhaltezapfen (30c) und präzise Positionierung auf der Plattform (P) (Fig. 5) mit der Möglichkeit zeitgleich eine zweite Steige (A1) dem Beschickungsförderband (2) zuzuführen;
- Freigabe der ersten Steige (A) durch Einfahren (3y, 30y) aller Zapfen (3c, 30c);
- vertikale Bewegung (Ps, Pi) der Plattform (P) zusammen mit der Steige (A) in den Bearbeitungsbereich (S, I) (Fig. 6);
- Durchführung der Bearbeitungen an der Steige (A), mit der Möglichkeit der Zuführung (2a) der zweiten Steige (A1) in Richtung der Plattform (P) (Fig. 6);
- Rückpositionierung der ersten Steige (A) in die Transferebene durch die vertikale Bewegung (Ps, Pi), mit eventuellem Positionieren und Ausfahren der Mitnehmerzapfen (3c) hinter der zweiten Steige (A1);
- Transfer (30x) der ersten Steige (A) von der Plattform (P) auf das Abführförderband (4) indem von den Rückhaltezapfen (30c) ein starker Beschleunigungsschub (30x) auf die hintere Querseite der Steige (A) ausgeübt wird und eventuell die zweite Steige (A1) in Richtung Plattform (P) geschoben (3x) wird während eine dritte Steige (A2) mittels der Rückhaltevorrichtung (8) am Ende des Zuführförderbands (1) zurückgehalten wird (Fig. 8);
- Transfer (4a) der ersten Steige (A) in Richtung Abführförderband (5) für eine eventuelle Stapelung oder anschließende Bearbeitung; mit eventueller Zuführung (2a) einer dritten Steige (A2) und Positionierung der zweiten Steige (A1) auf der Plattform (P) (Fig. 9).
